# EUROPEAN PATENT SPECIFICATION

(11) **EP 3 826 127 B1**
(45) Date of publication and mention of the grant of the patent: **27.03.2024**
(21) Application number: 19275127.9
(22) Date of filing: 20.11.2019
(51) Int. Cl.: H02M 7/483

(54) **IMPROVEMENTS IN OR RELATING TO POWER DISSIPATING CONVERTERS**
VERBESSERUNGEN AN ODER IM ZUSAMMENHANG MIT LEISTUNGSABFÜHRENDEN WANDLERN
AMÉLIORATIONS APPORTÉES OU SE RAPPORTANT À DES CONVERTISSEURS DE DISSIPATION D'ÉNERGIE

(43) Date of publication of application: 26.05.2021
(60) Divisional application: 24155266.0
(73) Proprietor: General Electric Technology GmbH, 5400 Baden (CH)
(72) Inventor: Jasim, Omar Fadhel, Stafford, ST16 1WS (GB); Nolan,, Andrew, Stafford, ST16 1WS (GB)
(74) Representative: Openshaw & Co.

(56) References cited:
- WO-A1-2013/000518
- US-A1- 2015 028 826
- US-B2- 9 954 358
- Kamran Sharifabadi: "Design, Control, and Application of Modular Multilevel Converters for HVDC Transmission Systems: Chapter 3: Dynamics and Control" In: "Design, Control, and Application of Modular Multilevel Converters for HVDC Transmission Systems: Chapter 3: Dynamics and Control", 1 January 2016 (2016-01-01), John Wiley & Sons, XP055695559, pages 133-213, * page 161 - page 166 *
- MAKOTO HAGIWARA ET AL: "Control and Experiment of Pulsewidth-Modulated Modular Multilevel Converters", IEEE TRANSACTIONS ON POWER ELECTRONICS, INSTITUTE OF ELECTRICAL AND ELECTRONICS ENGINEERS, USA, vol. 24, no. 7, 1 July 2009 (2009-07-01), pages 1737-1746, XP011264389, ISSN: 0885-8993

## Description

This invention relates to a power dissipating converter, for use with a power converter configured to convert between alternating current (AC) power and direct current (DC) power, and a method of controlling such a power dissipating converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks

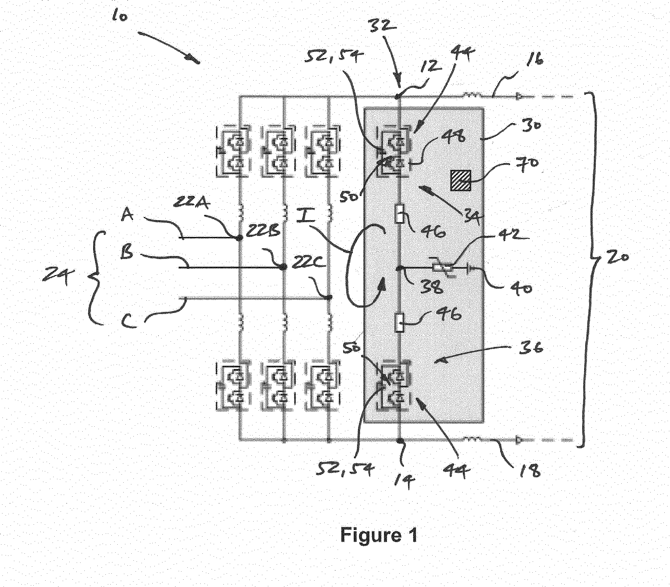

The conversion between DC power and AC power is utilized where it is necessary to interconnect DC and AC networks. In any such power transmission network, converters (i.e. power converters) are required at each interface between AC and DC power to affect the required conversion from AC to DC or from DC to AC. Such power converters may take the form of a voltage source converter 10, as shown in Figure 1, to perform power conversion, although other types of power converter are also possible.

In the example shown the known power converter 10, i.e. voltage source converter, extends between first and second DC terminals 12, 14, which in use are connected with first and second transmission cables 16, 18 of a DC network 20, that in this example takes the form of a DC link to an offshore wind park (not shown). The known power converter 10 is also connected via respective AC terminals 22A, 22B, 22C to three phases A, B, C of an onshore three-phase AC network 24. Other power converter and AC/DC network configurations are, however, also possible.

The DC power received from the DC network 20, i.e. the DC power from the wind park, will, in most instances, be generated continuously, and so creates challenges for the receiving onshore AC network 24, particularly when the AC network 24 is unable to accept the power, e.g. because of a fault with the power converter 10 or in the associated AC network 24 which may result in a reduced power demand by the AC network 24.

Such onshore power converters 10 are therefore sometimes used in combination with a power dissipating converter which temporarily absorbs some or all of the DC power transmitted from the offshore DC network 20 in circumstances when the onshore AC network 24 is unable to accept this power.

The power dissipating converter within such a power conversion scheme is sometimes known as a Dynamic Braking System (DBS).

Figure 15 of US 2015/0028826 A1 shows such a power dissipating converter, i.e. control circuit (100), which has first and second limb portions that each includes a chain-link converter, i.e. first and second set of modules (104a, 104b), which is connected in series with a power dissipating resistor (36). The US 2015/0028826 A1 power dissipating converter is controlled to operate in each of a first, inactive mode and a second, active mode. In the inactive mode chain-link modules in each chain-link converter are controlled to store an individual energy amount whereby the cumulative voltage source provided by the sum of all of the individual energy amounts in a respective chain-link converter is equal to the DC voltage presented at the corresponding DC terminal. WO 2013/000518 A1 discloses a control circuit comprising first and second DC terminals for connection to DC transmission lines. The first and second DC terminals have a plurality of modules and at least one energy conversion element connected therebetween to define a current transmission path. Each module includes at least one energy storage device. The or each energy storage device is selectively removable from the current transmission path to cause current to flow through the current transmission path and the or each energy conversion element and thereby remove energy from the DC transmission lines. US 9954358 B2 discloses a control circuit including first and second primary terminals for connection to a DC network, a secondary terminal connected in series between the first and second primary terminals and at least one auxiliary energy conversion element and an auxiliary terminal.

According to a first aspect of the invention there is provided a power dissipating converter as defined below in claim 1.

Having each chain-link converter provide a voltage source that is the sum of all of the individual voltage sources provided by the chain-link modules therein, means that the energy, i.e. voltage, each individual chain-link module has to store is substantially less than, e.g. the amount of energy it is required to store during operation of the power dissipating converter in the second active mode.

The requirement for each individual chain-link module in a given chain-link converter to store only a reduced amount of energy allows the controller to maintain the power dissipating converter in the inactive mode for longer than would ordinarily be the case with, e.g. a conventional power dissipating converter, and thereby reduces the losses incurred by the power dissipating converter of the invention.

The controller is able to maintain the power dissipating converter in the inactive mode for longer because the lower energy storage requirement of each chain-link module can be maintained to a degree by the very low stray current flowing through the power dissipating converter when operating in the inactive mode.

Moreover, the inclusion of a controller programmed to control the chain-link modules in a respective chin-link converter to store an amount of energy commensurate with the rate at which each individual chain-link module discharges energy, allows the different rates of energy discharge by respective chain-link modules, e.g. because of the rate at which corresponding ancillary control electronics draw energy from the said chain-link modules, to be accommodated, such that the cumulative voltage source provided by a given chain-link converter can be maintained at a desired operative level for as long as possible, thereby allowing the corresponding power dissipating converter to be operated in the, lower loss generating, first inactive mode for as long as possible.

In a further preferred embodiment of the invention the controller is programmed to control those chain-link modules with a tendency to discharge more quickly to store more energy and those chain-link modules with a tendency to discharge more slowly to store less energy.

The controller may be programmed, when switching the power dissipating converter to operate in the second active mode, to control the energy storage device in each chain-link module to store an increased amount of energy necessary to operate the power dissipating converter in the said second active mode.

Such a controller permits the power dissipating converter of the invention to achieve the much lower energy losses associated with operating in the inactive mode for an extended period of time, and also extends the service life of the power dissipating converter of the invention by reducing the amount of switching of individual chain-link modules needed. Such a controller provides the aforementioned benefits while also permitting the power dissipating converter to provide its normal energy dissipating functionality when needed.

Optionally the controller is further programmed to operate the power dissipating converter in a third mode, the third mode being a balancing mode in which the controller causes a balancing current, smaller than the discharge current, to flow through each chain-link converter.

Having a controller so programmed allows for a modest degree of charging and discharging of the energy storage device in one or more chain-link modules to be carried out to adequately share, or balance, amongst the chain-link modules the amount of energy so stored, e.g. in circumstances when the degree of charging provided by very low stray current flowing through the power dissipating converter when operating in the inactive mode becomes inadequate, without the need to utilise the much larger discharge current which would otherwise result in significantly higher energy losses.

In a still further preferred embodiment of the invention the controller is further programmed to determine one of a maximum or minimum voltage stored by an individual energy storage device, to compare the said maximum or minimum individual stored voltage with the average voltage stored by all energy storage devices, and to operate the power dissipating converter in the third balancing mode and thereby cause the balancing current to flow when the difference between the said maximum or minimum individual stored voltage and the average voltage stored by all energy storage devices exceeds a predetermined threshold.

Programming the controller in this manner advantageously automates when the power dissipating converter is controlled to operate in the third balancing mode.

According to a second aspect of the invention there is provided a method of controlling a power dissipating converter as defined below in claim 6.

The method of the invention shares the benefits of the corresponding features of the power dissipating converter of the invention.

There now follows a brief description of preferred embodiments of the invention, by way of non-limiting example, with reference being made to the following figures in which:
Figure 1 shows a schematic view of a power conversion scheme incorporating an onshore power converter together with a power dissipating converter according to a first embodiment of the invention.

A power dissipating converter 30 according to a first embodiment of the invention is shown schematically in Figure 1.

The power dissipating converter 30 comprises first and second DC terminals 12, 14, as described hereinabove, along with a converter limb 32 which extends between the first and second DC terminals 12, 14.

The converter limb 32 includes first and second limb portions 34, 36 that are separated by a ground terminal 38 which is for connection to ground 40, preferably via a surge arrestor 42.

Each limb portion 34, 36 includes a chain-link converter 44 which is connected in series with a power dissipating resistor 46. In turn, each chain-link converter 44 includes a plurality of series-connected chain-link modules 48, only one of which is shown in Figure 1.

Each chain-link module 48 includes a plurality of switching elements 50 that are connected in parallel with an energy storage device 52 in the form of a capacitor 54. In the embodiment shown each switching element 50 includes a semiconductor device in the form of, e.g. an Insulated Gate Bipolar Transistor (IGBT), which is connected in parallel with an anti-parallel diode. It is, however, possible to use other semiconductor devices, and a different type of energy storage device 52 may also be employed.

In the embodiment shown, each chain-link module 48 includes only a first pair of switching elements 50 that are connected in parallel with the capacitor 54 in a known half-bridge arrangement to define a 2-quadrant unipolar module. Switching of the switching elements 50 selectively directs current through the capacitor 54 or causes current to bypass the capacitor 54 such that the chain-link module 48 can provide zero or positive voltage and can conduct current in two directions.

In other embodiments, however, chain-link modules in which first and second pairs of switching elements and a capacitor are connected in a known full bridge arrangement to define a 4-quadrant bipolar module, may also be used instead of some or all of the aforementioned 2-quadrant unipolar modules.

In any event, nevertheless, each chain-link module 48 is selectively operable to provide a voltage source and the corresponding chain-link converter 44 is selectively operable to provide a stepped variable voltage source.

The power dissipating converter 30 also includes a controller 70 that is programmed to operate the power dissipating converter 30 in first and second modes, the first mode being an inactive mode and the second mode being an active mode.

In the first inactive mode, the power dissipating converter 30 is prevented from exchanging current with the DC network 20 with which it is in-use connected via the first and second DC terminals 12, 14 and no power from the DC network 20 is dissipated by either power dissipating resistor 4.

More particularly the controller 70, when operating the power dissipating converter 30 in the first inactive mode, is programmed to prevent an exchange of current with the in-use connected DC network 20 by controlling the chain-link modules 48 in each chain-link converter 44 to store an individual energy amount whereby the cumulative voltage source provided by the sum of all of the individual energy amounts in a respective chain-link converter 44 is equal to the DC voltage presented at the corresponding DC terminal 12, 14.

In other words, the energy storage device 52, i.e. capacitor 54, in each chain-link module 48 within each chain-link converter 44 is required to store a particular, individual energy amount so that when summed together all of the individual energy amounts provide a voltage source that is equal to the DC voltage presented at the corresponding DC terminal 12, 14, i.e. the cumulative voltage source provided by the chain-link converter 44 in the first limb portion 34 is equal to the DC voltage presented at the first DC terminal 12 by the first transmission cable 16, such that effectively no current flows through the first limb portion 34, and the cumulative voltage source provided by the chain-link converter 44 in the second limb portion 36 is equal to the DC voltage presented at the second DC terminal 14 by the second transmission cable 18, such that effectively no current flows through the second limb portion 36.

Having each chain-link converter 44 provide a voltage source in the foregoing manner, i.e. by summing together the individual voltage sources provided by all of the corresponding chain-link modules 48, is different to providing a voltage source by having only a select number of chain-link modules 48 switched into circuit to provide their respective individual voltage sources. This is because the latter requires the energy storage devices in the selected chain-link modules 48 to store a much larger amount of energy, indeed a larger amount of energy commensurate with the amount needed for normal operation, e.g. when the power dissipating converter 30 is operating in the second active mode. In contrast, utilising all of the chain-link modules 48 to cumulatively provide the required voltage source means that each individual chain-link module 48 needs to store far less energy.

In the embodiment shown, the controller 70 is programmed to control the chain-link modules 48 in each chain-link converter 44 to store an amount of energy commensurate with the rate at which each individual chain-link module 48 discharges energy.

More particularly, the controller 70 is programmed to control those chain-link modules 48 with a tendency to discharge more quickly to store more energy and those chain-link modules 48 with a tendency to discharge more slowly to store less energy.

In other arrangements, not forming a part of the invention (not shown) the controller 70 may instead be programmed to control the chain-link modules 48 in one or both of the chain-link converters 44 to store an equal amount of energy.

In any event, when the controller 70 is operating the power dissipating converter 30 in the aforementioned first inactive mode, it does so in a so-called "blocked" manner. This means that once the controller 70 has instructed each chain-link converter 44 to provide a cumulative voltage source that matches the DC voltage presented at the corresponding DC terminal 12, 14, the controller 70 does not control or further monitor the individual energy sources, i.e. voltages, provided by each chain-link module 48 within each chain-link converter 44. These control and monitoring functions are instead handled by individual module control electronics associated with each chain-link module 48.

In practice, even when the power dissipating converter 30 is operating in the first inactive mode, there will occasionally be a mismatch between the cumulative voltage source provided by one or both of the chain-link converters 44 and the DC voltage presented at the corresponding DC terminal 12, 14, e.g. because of a need to draw a small amount of energy from a given chain-link module 48 to power the associated module control electronics and the commensurate minor depletion in the individual energy amount, i.e. voltage, that the said chain-link module 48 can provide.

Such an occasional mismatch causes a very low stray current, typically of only a few amps, to flow through the power dissipating converter 30, even though it is operating in the first inactive mode.

When occasionally flowing, the very low stray current can, however, be used to replenish the small amount of energy drawn, or otherwise lost, from one or more individual chain-link modules 48. Such modest recharging of the individual chain-link modules 48 nevertheless can, in turn, help to maintain the power dissipating converter 30 in the inactive mode for an extended period of time.

Meanwhile, when the controller 70 is operating the power dissipating converter 30 in the second active mode the power dissipating converter 30 exchanges a discharge current with the DC network 20 and power from the DC network 20 is dissipated by each power dissipating resistor 46.

More particularly, when operating the power dissipating converter 30 in the second active mode, the controller 70 is programmed to bypass the energy storage devices 52, i.e. capacitors 54, in all of the chain-link modules 48 in at least one chain-link converter 44 whereby the DC voltage presented at the corresponding DC terminal 12, 14 by the corresponding transmission cable 16 is applied to the corresponding power dissipating resistor 46, the discharge current flows and power is dissipated by the said corresponding power dissipating resistor 46.

The controller 70 may, optionally, during the remaining period that the power dissipating converter 30 is operating in the second active mode, be programmed to carry out a chain-link module 48 capacitor voltage and energy balancing activity. The controller 70 does this by controlling each chain-link converter 44 to provide a stepped variable voltage source which during a given operating period is both greater than and less than the DC voltage presented at the corresponding DC terminal 12, 14, whereby the discharge current is controlled to flow both into and out of the corresponding limb portion 34, 36 in order to affect the said voltage and energy balancing.

In the embodiment shown, the controller 70 is programmed, when switching the power dissipating converter 30 to operate in the second active mode, to control the energy storage device 52, i.e. capacitor 54, in each chain-link module 48 to store an increased amount of energy necessary to operate the power dissipating converter 30 in the said second active mode. In this manner, the controller 70 utilises the discharge current to provide the required charging of each capacitor 54.

In this regard, the discharge current is typically several kiloamps, and so is much larger than the very low stray current of a few amps that occasionally flows through the power dissipating converter 30. As a consequence the discharge current is much more effective at charging the capacitors 54 in individual chain-link modules 48 to the required extent in a very short time.

The controller 70 is still further programmed to operate the power dissipating converter 30 in a third mode, which is a balancing mode in which the controller 70 causes a balancing current I, smaller than the discharge current, to flow through each chain-link converter 44. The balancing current I is usually around 10A to 15A, and so while considerably smaller than the discharge current, it is nevertheless larger than the occasional very low stray current. The balancing current I is, therefore, more effective than the stray current at charging individual chain-link modules 48.

Moreover, the controller 70 is programmed to determine a minimum voltage stored by an individual energy storage device 52, i.e. capacitor 54, to compare the said minimum individual stored voltage with the average voltage stored by all energy storage devices 52, and to operate the power dissipating converter 30 in the third balancing mode and thereby cause the balancing current I to flow, when the difference between the minimum individual stored voltage and the average voltage stored by all energy storage devices 52 exceeds a predetermined threshold.

In other embodiments of the invention, the controller may instead determine a maximum voltage stored by an individual energy storage device, and compare that to the average voltage stored in order to determine when to operate the power dissipating converter in the third balancing mode.

In use, the power dissipating converter 30 of the invention is controlled according to a method comprising the steps of:
(a) selectively operating the power dissipating converter 30 in a first mode, the first mode being an inactive mode in which the power dissipating converter 30 is prevented from exchanging current with a DC network 20 connected in-use to the first and second DC terminals 12, 14 and no power from the DC network 20 is dissipated by either power dissipating resistor 46;
(b) selectively operating the power dissipating converter 30 in a second mode, the second mode being an active mode in which the power dissipating converter 30 exchanges a discharge current with the DC network 20 and power from the DC network 20 is dissipated by each power dissipating resistor 46; and
(c) when operating the power dissipating converter 30 in the first inactive mode, preventing an exchange of current with the in-use connected DC network 20 by controlling the chain-link modules 48 in each chain-link converter 44 to store an individual energy amount whereby the cumulative voltage source provided by the sum of all of the individual energy amounts in a respective chain-link converter 44 is equal to the DC voltage presented at the corresponding DC terminal 12, 14.

When operating the power dissipating converter (30) in the first inactive mode the chain-link modules (48) in a respective chain-link converter (44) are controlled to store an amount of energy commensurate with the rate at which each individual chain-link module (48) discharges energy.

## Claims

1. A power dissipating converter (30) for use with a power converter (10) configured to convert between AC power and DC power, the power dissipating converter (30) comprising:
first and second DC terminals (12, 14) for connection to a DC network (20);
a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series-connected chain-link modules (48), each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source; and
a controller (70) programmed to operate the power dissipating converter (30) in a first inactive mode and a second active mode, the first inactive mode being a mode in which the power dissipating converter (30) is prevented from exchanging current with a DC network (20) connected in-use to the first and second DC terminals (12, 14) and no power from the DC network (20) is dissipated by either power dissipating resistor (46), and the second active mode being a mode in which the power dissipating converter (30) exchanges a discharge current with the DC network (20) and power from the DC network (20) is dissipated by each power dissipating resistor (46),
the controller (70), when operating the power dissipating converter (30) in the first inactive mode, being programmed to prevent an exchange of current with the in-use connected DC network (20) by instructing the chain-link modules (48) in each chain-link converter (44) to store an individual energy amount whereby the cumulative voltage source provided by the sum of the individual energy amounts of all chain-link modules (48) in a respective chain-link converter (44) is equal to the DC voltage presented at the corresponding DC terminal (12, 14), and
the power dissipating converter (30) being **characterised in that** the controller (70), when operating the power dissipating converter (30) in the first inactive mode, is programmed to instruct the chain-link modules (48) in a respective chain-link converter (44) to store an individual energy amount commensurate with the rate at which each individual chain-link module (48) discharges energy,
the power dissipating converter (30) further comprising individual module control electronics associated with each chain-link module (48) and configured to control and monitor the voltage of the energy storage device (52) of each chain-link module (48) after the controller (70) has instructed the chain-link modules (48) to store the individual energy amount,
wherein the individual module control electronics are configured to use a stray current flowing through the power dissipating converter (30) to replenish a small amount of energy lost from a corresponding chain-link module (48).

2. A power dissipating converter (30) according to Claim 1 wherein the controller (70) is programmed to control those chain-link modules (48) with a tendency to discharge more quickly to store more energy and those chain-link modules (48) with a tendency to discharge more slowly to store less energy.

3. A power dissipating converter (30) according to Claim 1 or Claim 2 wherein the controller (70) is programmed, when switching the power dissipating converter (30) to operate in the second active mode, to control the energy storage device (52) in each chain-link module (48) to store an increased amount of energy necessary to operate the power dissipating converter (30) in the said second active mode.

4. A power dissipating converter (30) according to any preceding claim wherein the controller (70) is further programmed to operate the power dissipating converter (30) in a third mode, the third mode being a balancing mode in which the controller (70) causes a balancing current (I), smaller than the discharge current, to flow through each chain-link converter (44).

5. A power dissipating converter (30) according to Claim 4 wherein the controller (70) is further programmed to determine one of a maximum or minimum voltage stored by an individual energy storage device (52), to compare the said maximum or minimum individual stored voltage with the average voltage stored by all energy storage devices (52), and to operate the power dissipating converter (30) in the third balancing mode and thereby cause the balancing current (I) to flow when the difference between the said maximum or minimum individual stored voltage and the average voltage stored by all energy storage devices (52) exceeds a predetermined threshold.

6. A method of controlling a power dissipating converter (30) for use with a power converter (10) configured to convert between AC power and DC power, the power dissipating converter (30) comprising: first and second DC terminals (12, 14) for connection to a DC network (20); and a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series connected chain-link modules (48), and each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source,
the method comprising the steps of:
(a) selectively operating the power dissipating converter (30) in a first inactive mode, the first inactive mode being a mode in which the power dissipating converter (30) is prevented from exchanging current with a DC network (20) connected in-use to the first and second DC terminals (12, 14) and no power from the DC network (20) is dissipated by either power dissipating resistor (46);
(b) selectively operating the power dissipating converter (30) in a second active mode, the second active mode being a mode in which the power dissipating converter (30) exchanges a discharge current with the DC network (20) and power from the DC network (20) is dissipated by each power dissipating resistor (46); and
(c) when operating the power dissipating converter (30) in the first inactive mode, preventing an exchange of current with the in-use connected DC network (20) by controlling the chain-link modules (48) in each chain-link converter (44) to store an individual energy amount whereby the cumulative voltage source provided by the sum of the individual energy amounts of all chain-link modules (48) in a respective chain-link converter (44) is equal to the DC voltage presented at the corresponding DC terminal (12, 14),
the method of controlling a power dissipating converter (30) being **characterised in that** when operating the power dissipating converter (30) in the first inactive mode the chain-link modules (48) in a respective chain-link converter (44) are instructed to store an individual energy amount commensurate with the rate at which each individual chain-link module (48) discharges energy, and individual module control electronics associated with each chain-link module (48) control and monitor the voltage of the energy storage device (52) of each chain-link module (48) after the chain-link modules (48) have been instructed to store the individual energy amount,
wherein the individual module control electronics are configured to use a stray current flowing through the power dissipating converter (30) to replenish a small amount of energy lost from a corresponding chain-link module (48).

## Patentansprüche

1. Verlustleistungswandler (30) zur Verwendung mit einem Leistungswandler (10), der dazu konfiguriert ist, zwischen Wechselstrom und Gleichstrom umzuwandeln, wobei der Verlustleistungswandler (30) umfasst:
erste und zweite Gleichstromanschlüsse (12, 14) zum Verbinden mit einem Gleichstromnetz (20);
einen Wandlerschenkel (32), der sich zwischen dem ersten und zweiten Gleichstromanschluss (12,14) erstreckt und erste und zweite Schenkelabschnitte (34, 36) beinhaltet, die durch einen Erdungsanschluss (38) zur Verbindung mit der Erde (40) getrennt sind wobei jeder Schenkelabschnitt (34, 36) einen Kettengliedwandler (44) beinhaltet, der in Reihe mit einem Verlustleistungswiderstand (46) verbunden ist, wobei jeder Kettengliedwandler (44) eine Vielzahl von in Reihe verbundenen Kettengliedmodulen (48) beinhaltet, wobei jedes Kettengliedmodul (48) eine Vielzahl von Schaltelementen (50) beinhaltet, die parallel mit einer Energiespeichervorrichtung (52) verbunden sind, wodurch jedes Kettengliedmodul (48) selektiv betreibbar ist, um eine Spannungsquelle bereitzustellen, und der entsprechende Kettengliedwandler (44) selektiv betreibbar ist, um eine gestufte variable Spannungsquelle bereitzustellen; und
eine Steuereinheit (70), die dazu programmiert ist, den Verlustleistungswandler (30) in einem ersten inaktiven Modus und einem zweiten aktiven Modus zu betreiben, wobei der erste inaktive Modus ein Modus ist, in dem verhindert wird, dass der Verlustleistungswandler (30) Strom mit einem Gleichstromnetz (20) austauscht, welches im Betrieb mit dem ersten und zweiten Gleichstromanschluss (12, 14) verbunden ist, und keine Leistung aus dem Gleichstromnetz (20) durch einen Verlustwiderstand (46) abgeleitet wird, und der zweite aktive Modus ein Modus ist, in dem der Verlustleistungswandler (30) einen Entladestrom mit dem Gleichstromnetz (20) austauscht und Leistung aus dem Gleichstromnetz (20) durch jeden Verlustleistungswiderstand (46) abgeleitet wird,
wobei die Steuereinheit (70) beim Betreiben des Verlustleistungswandlers (30) im ersten inaktiven Modus dazu programmiert ist, einen Stromaustausch mit dem im Betrieb verbundenen Gleichstromnetz (20) zu verhindern, indem die Kettenverbindungsmodule (48) in jedem Kettengliedwandler (44) angewiesen werden, eine individuelle Energiemenge zu speichern, wodurch die kumulierte Spannungsquelle, die durch die Summe der individuellen Energiemengen aller Kettengliedmodule (48) in einem jeweiligen Kettengliedwandler (44) bereitgestellt wird, gleich der Gleichspannung ist, die am entsprechenden Gleichstromanschluss (12, 14) anliegt, und
wobei der Verlustleistungswandler (30) **dadurch gekennzeichnet ist, dass** die Steuereinheit (70) beim Betreiben des Verlustleistungswandlers (30) im ersten inaktiven Modus dazu programmiert ist, die Kettengliedmodule (48) in einem jeweiligen Kettengliedwandler (44) anzuweisen, eine individuelle Energiemenge, die der Rate entspricht, mit der jedes einzelne Kettengliedmodul (48) Energie entlädt, zu speichern,
wobei der Verlustleistungswandler (30) weiter eine individuelle Modulsteuerelektronik umfasst, die jedem Kettengliedmodul (48) zugeordnet ist, und dazu konfiguriert ist, die Spannung der Energiespeichervorrichtung (52) eines jeden Kettengliedmoduls (48) zu steuern und zu überwachen, nachdem die Steuereinheit (70) die Kettengliedmodule (48) angewiesen hat, die individuelle Energiemenge zu speichern,
wobei die individuelle Modulsteuerelektronik dazu konfiguriert ist, einen durch den Verlustleistungswandler (30) fließenden Streustrom zu nutzen, um eine geringe Menge an Energie wieder aufzuladen, die aus einem entsprechenden Kettengliedmodul (48) verloren gegangen ist.

2. Verlustleistungswandler (30) nach Anspruch 1, wobei die Steuereinheit (70) dazu programmiert ist, diejenigen Kettengliedmodule (48), die dazu neigen, sich schneller zu entladen, zu steuern, mehr Energie zu speichern, und diejenigen Kettengliedmodule (48), die dazu neigen, sich langsamer zu entladen, weniger Energie zu speichern.

3. Verlustleistungswandler (30) nach Anspruch 1 oder Anspruch 2, wobei die Steuereinheit (70) dazu programmiert ist, beim Umschalten des Verlustleistungswandlers (30) zum Betreiben im zweiten aktiven Modus die Energiespeichervorrichtung (52) in jedem Kettengliedmodul (48) zu steuern, eine erhöhte Energiemenge zu speichern, die zum Betreiben des Verlustleistungswandlers (30) im zweiten aktiven Modus erforderlich ist.

4. Verlustleistungswandler (30) nach einem der vorstehenden Ansprüche, wobei die Steuereinheit (70) weiter dazu programmiert ist, den Verlustleistungswandler (30) in einem dritten Modus zu betreiben, wobei der dritte Modus ein Ausgleichsmodus ist, in dem die Steuereinheit (70) einen Ausgleichsstrom (I), der geringer als der Entladestrom ist, veranlasst, durch jeden Kettengliedwandler (44) zu fließen.

5. Verlustleistungswandler (30) nach Anspruch 4, wobei die Steuereinheit (70) weiter dazu programmiert ist, eine von einer maximalen oder minimalen Spannung zu bestimmen, die von einer individuellen Energiespeichervorrichtung (52) gespeichert wird, die maximale oder minimale individuelle gespeicherte Spannung mit der Durchschnittsspannung zu vergleichen, die von allen Energiespeichervorrichtungen (52) gespeichert wird, und den Verlustleistungswandler (30) im dritten Ausgleichsmodus zu betreiben und dadurch zu veranlassen, dass der Ausgleichsstrom (I) fließt, wenn die Differenz zwischen der maximalen oder minimalen individuellen gespeicherten Spannung und der Durchschnittsspannung, die von allen Energiespeichervorrichtungen (52) gespeichert wird, einen vorbestimmten Schwellenwert überschreitet.

6. Verfahren zum Steuern eines Verlustleistungswandlers (30) zur Verwendung mit einem Leistungswandler (10), der dazu konfiguriert ist, zwischen Wechselstrom und Gleichstrom umzuwandeln, wobei der Verlustleistungswandler (30) umfasst: erste und zweite Gleichstromanschlüsse (12, 14) zum Verbinden mit einem Gleichstromnetz (20); und einen Wandlerschenkel (32), der sich zwischen dem ersten und zweiten Gleichstromanschluss (12, 14) erstreckt und erste und zweite Schenkelabschnitte (34, 36) beinhaltet, die durch einen Erdungsanschluss (38) zur Verbindung mit der Erde (40) getrennt sind, wobei jeder Schenkelabschnitt (34, 36) einen Kettengliedwandler (44) beinhaltet, der in Reihe mit einem Verlustleistungswiderstand (46) verbunden ist, wobei jeder Kettengliedwandler (44) eine Vielzahl von in Reihe verbundenen Kettengliedmodulen (48) beinhaltet, und jedes Kettengliedmodul (48) eine Vielzahl von Schaltelementen (50) beinhaltet, die parallel mit einer Energiespeichervorrichtung (52) verbunden sind, wodurch jedes Kettengliedmodul (48) selektiv betreibbar ist, um eine Spannungsquelle bereitzustellen, und der entsprechende Kettengliedwandler (44) selektiv betreibbar ist, um eine gestufte variable Spannungsquelle bereitzustellen,
wobei das Verfahren die Schritte umfasst zum:
(a) selektiven Betreiben des Verlustleistungswandlers (30) in einem ersten inaktiven Modus, wobei der erste inaktive Modus ein Modus ist, in dem verhindert wird, dass der Verlustleistungswandler (30) Strom mit einem Gleichstromnetz (20) austauscht, welches im Betrieb mit dem ersten und zweiten Gleichstromanschluss (12, 14) verbunden ist, und keine Leistung aus dem Gleichstromnetz (20) durch einen Verlustleistungswiderstand (46) abgeleitet wird;
(b) selektiven Betreiben des Verlustleistungswandlers (30) in einem zweiten aktiven Modus, wobei der zweite aktive Modus ein Modus ist, in dem der Verlustleistungswandler (30) einen Entladestrom mit dem Gleichstromnetz (20) austauscht und Leistung aus dem Gleichstromnetz (20) durch jeden Verlustleistungswiderstand (46) abgeleitet wird; und
(c) beim Betreiben des Verlustleistungswandlers (30) im ersten inaktiven Modus, Verhindern eines Stromaustauschs mit dem im Betrieb verbundenen Gleichstromnetz (20) durch Steuern der Kettengliedmodule (48), in jedem Kettengliedwandler (44), eine individuelle Energiemenge zu speichern, wodurch die kumulierte Spannungsquelle, die durch die Summe der individuellen Energiemengen aller Kettengliedmodule (48) in einem jeweiligen Kettengliedwandler (44) bereitgestellt wird, gleich der Gleichspannung ist, die am entsprechenden Gleichstromanschluss (12, 14) anliegt,
wobei das Verfahren zum Steuern eines Verlustleistungswandlers (30) **dadurch gekennzeichnet ist, dass** beim Betreiben des Verlustleistungswandlers (30) im ersten inaktiven Modus die Kettengliedmodule (48) in einem jeweiligen Kettengliedwandler (44) dazu angewiesen werden, eine individuelle Energiemenge, die der Rate entspricht, mit der jedes einzelne Kettengliedmodul (48) Energie entlädt, zu speichern, und eine individuelle Modulsteuerelektronik, die jedem Kettengliedmodul (48) zugeordnet ist, die Spannung der Energiespeichervorrichtung (52) eines jeden Kettengliedmoduls (48) steuert und überwacht, nachdem die Kettengliedmodule (48) angewiesen wurden, die individuelle Energiemenge zu speichern,
wobei die individuelle Modulsteuerelektronik dazu konfiguriert ist, einen durch den Verlustleistungswandler (30) fließenden Streustrom zu nutzen, um eine geringe Menge an Energie wieder aufzuladen, die aus einem entsprechenden Kettengliedmodul (48) verloren gegangen ist.

## Revendications

1. Convertisseur de dissipation de puissance (30) destiné à être utilisé avec un convertisseur de puissance (10) configuré pour réaliser une conversion entre une puissance CA et une puissance CC, le convertisseur de dissipation de puissance (30) comprenant :
des première et seconde bornes CC (12, 14) pour une connexion à un réseau CC (20) ;
une branche de convertisseur (32) s'étendant entre les première et seconde bornes CC (12, 14) et incluant des première et seconde parties de branche (34, 36) séparées par une borne de mise à la terre (38) pour une connexion à la terre (40), chaque partie de branche (34, 36) incluant un convertisseur à maillons de chaîne (44) connecté en série avec une résistance de dissipation de puissance (46), chaque convertisseur à maillons de chaîne (44) incluant une pluralité de modules de maillon de chaîne connectés en série (48), chaque module de maillon de chaîne (48) incluant une pluralité d'éléments de commutation (50) connectés en parallèle avec un dispositif de stockage d'énergie (52) selon lequel chaque module de maillon de chaîne (48) peut fonctionner de manière sélective pour fournir une source de tension et le convertisseur à maillons de chaîne correspondant (44) peut fonctionner de manière sélective pour fournir une source de tension variable étagée ; et
un dispositif de commande (70) programmé pour faire fonctionner le convertisseur de dissipation de puissance (30) dans un premier mode inactif et un deuxième mode actif, le premier mode inactif étant un mode dans lequel le convertisseur de dissipation de puissance (30) ne peut pas échanger de courant avec un réseau CC (20) connecté en utilisation aux première et seconde bornes CC (12, 14) et aucune puissance provenant du réseau CC (20) n'est dissipée par l'une ou l'autre résistance de dissipation de puissance (46), et le deuxième mode actif étant un mode dans lequel le convertisseur de dissipation de puissance (30) échange un courant de décharge avec le réseau CC (20) et la puissance provenant du réseau CC (20) est dissipée par chaque résistance de dissipation de puissance (46),
le dispositif de commande (70), lors du fonctionnement du convertisseur de dissipation de puissance (30) dans le premier mode inactif, étant programmé pour empêcher un échange de courant avec le réseau CC connecté en utilisation (20) en ordonnant aux modules de maillon de chaîne (48) dans chaque convertisseur à maillons de chaîne (44) de stocker une quantité d'énergie individuelle selon lequel la source de tension cumulée fournie par la somme des quantités d'énergie individuelles de tous les modules de maillon de chaîne (48) dans un convertisseur à maillons de chaîne respectif (44) est égale à la tension CC présentée à la borne CC correspondante (12, 14), et
le convertisseur de dissipation de puissance (30) étant **caractérisé en ce que** le dispositif de commande (70), lors du fonctionnement du convertisseur de dissipation de puissance (30) dans le premier mode inactif, est programmé pour ordonner aux modules de maillon de chaîne (48) dans un convertisseur à maillons de chaîne respectif (44) de stocker une quantité d'énergie individuelle proportionnelle au débit auquel chaque module de maillon de chaîne individuel (48) décharge de l'énergie,
le convertisseur de dissipation de puissance (30) comprenant en outre des composants électroniques de commande de module individuels associés à chaque module de maillon de chaîne (48) et configurés pour commander et surveiller la tension du dispositif de stockage d'énergie (52) de chaque module de maillon de chaîne (48) après que le dispositif de commande (70) a ordonné aux modules de maillon de chaîne (48) de stocker la quantité d'énergie individuelle,
dans lequel les composants électroniques de commande de module individuels sont configurés pour utiliser un courant vagabond circulant à travers le convertisseur de dissipation de puissance (30) afin de reconstituer une petite quantité d'énergie perdue à partir d'un module de maillon de chaîne correspondant (48).

2. Convertisseur de dissipation de puissance (30) selon la revendication 1, dans lequel le dispositif de commande (70) est programmé pour commander ces modules de maillon de chaîne (48) ayant tendance à se décharger plus rapidement pour stocker plus d'énergie et ces modules de maillon de chaîne (48) ayant tendance à se décharger plus lentement pour stocker moins d'énergie.

3. Convertisseur de dissipation de puissance (30) selon la revendication 1 ou la revendication 2, dans lequel le dispositif de commande (70) est programmé, lors d'une commutation du convertisseur de dissipation de puissance (30) pour fonctionner dans le deuxième mode actif, pour commander le dispositif de stockage d'énergie (52) dans chaque module de maillon de chaîne (48) afin de stocker une quantité accrue d'énergie nécessaire pour faire fonctionner le convertisseur de dissipation de puissance (30) dans ledit deuxième mode actif.

4. Convertisseur de dissipation de puissance (30) selon une quelconque revendication précédente, dans lequel le dispositif de commande (70) est en outre programmé pour faire fonctionner le convertisseur de dissipation de puissance (30) dans un troisième mode, le troisième mode étant un mode d'équilibrage dans lequel le dispositif de commande (70) amène un courant d'équilibrage (I), inférieur au courant de décharge, à circuler à travers chaque convertisseur à maillons de chaîne (44).

5. Convertisseur de dissipation de puissance (30) selon la revendication 4, dans lequel le dispositif de commande (70) est en outre programmé pour déterminer l'une d'une tension maximale ou minimale stockée par un dispositif de stockage d'énergie individuel (52), pour comparer ladite tension stockée individuelle maximale ou minimale avec la tension moyenne stockée par tous les dispositifs de stockage d'énergie (52), et pour faire fonctionner le convertisseur de dissipation de puissance (30) dans le troisième mode d'équilibrage et amener ainsi le courant d'équilibrage (I) à circuler lorsque la différence entre ladite tension stockée individuelle maximale ou minimale et la tension moyenne stockée par tous les dispositifs de stockage d'énergie (52) dépasse un seuil prédéterminé.

6. Procédé de commande d'un convertisseur de dissipation de puissance (30) destiné à être utilisé avec un convertisseur de puissance (10) configuré pour réaliser une conversion entre une puissance CA et une puissance CC, le convertisseur de dissipation de puissance (30) comprenant : des première et seconde bornes CC (12, 14) pour une connexion à un réseau CC (20) ; et une branche de convertisseur (32) s'étendant entre les première et seconde bornes CC (12, 14) et incluant des première et seconde parties de branche (34, 36) séparées par une borne de mise à la terre (38) pour une connexion à la terre (40), chaque partie de branche (34, 36) incluant un convertisseur à maillons de chaîne (44) connecté en série avec une résistance de dissipation de puissance (46), chaque convertisseur à maillons de chaîne (44) incluant une pluralité de modules de maillon de chaîne connectés en série (48), et chaque module de maillon de chaîne (48) incluant une pluralité d'éléments de commutation (50) connectés en parallèle avec un dispositif de stockage d'énergie (52) selon lequel chaque module de maillon de chaîne (48) peut fonctionner de manière sélective pour fournir une source de tension et le convertisseur à maillons de chaîne correspondant (44) peut fonctionner de manière sélective pour fournir une source de tension variable étagée,
le procédé comprenant les étapes consistant à :
(a) faire fonctionner de manière sélective le convertisseur de dissipation de puissance (30) dans un premier mode inactif, le premier mode inactif étant un mode dans lequel le convertisseur de dissipation de puissance (30) ne peut pas échanger de courant avec un réseau CC (20) connecté en utilisation aux première et seconde bornes CC (12, 14) et aucune puissance provenant du réseau CC (20) n'est dissipée par l'une ou l'autre résistance de dissipation de puissance (46) ;
(b) faire fonctionner de manière sélective le convertisseur de dissipation de puissance (30) dans un deuxième mode actif, le deuxième mode actif étant un mode dans lequel le convertisseur de dissipation de puissance (30) échange un courant de décharge avec le réseau CC (20) et la puissance provenant du réseau CC (20) est dissipée par chaque résistance de dissipation de puissance (46) ; et
(c) lors du fonctionnement du convertisseur de dissipation de puissance (30) dans le premier mode inactif, empêcher un échange de courant avec le réseau CC connecté en utilisation (20) en commandant les modules de maillon de chaîne (48) dans chaque convertisseur à maillons de chaîne (44) pour stocker une quantité d'énergie individuelle selon lequel la source de tension cumulée fournie par la somme des quantités d'énergie individuelles de tous les modules de maillon de chaîne (48) dans un convertisseur à maillons de chaîne respectif (44) est égale à la tension CC présentée à la borne CC correspondante (12, 14),
le procédé de commande d'un convertisseur de dissipation de puissance (30) étant **caractérisé en ce que**, lors du fonctionnement du convertisseur de dissipation de puissance (30) dans le premier mode inactif, les modules de maillon de chaîne (48) dans un convertisseur à maillons de chaîne respectif (44) reçoivent l'ordre de stocker une quantité d'énergie individuelle proportionnelle au débit auquel chaque module de maillon de chaîne individuel (48) décharge de l'énergie, et des composants électroniques de commande de module individuels associés à chaque module de maillon de chaîne (48) commandent et surveillent la tension du dispositif de stockage d'énergie (52) de chaque module de maillon de chaîne (48) après que les modules de maillon de chaîne (48) ont reçu l'ordre de stocker la quantité d'énergie individuelle,
dans lequel les composants électroniques de commande de module individuels sont configurés pour utiliser un courant vagabond circulant à travers le convertisseur de dissipation de puissance (30) afin de reconstituer une petite quantité d'énergie perdue à partir d'un module de maillon de chaîne correspondant (48).
